# EUROPEAN PATENT SPECIFICATION

(11) **EP 3 650 565 B1**
(45) Date of publication and mention of the grant of the patent: **25.09.2024**
(21) Application number: 19202170.7
(22) Date of filing: 09.10.2019
(51) Int. Cl.: C22C 19/05

(54) **A NICKEL-BASE SUPERALLOY**
NICKELBASIERTE SUPERLEGIERUNG
SUPERALLIAGE À BASE DE NICKEL

(30) Priority: 08.11.2018 GB 201818180
(43) Date of publication of application: 13.05.2020
(73) Proprietor: Rolls-Royce plc, London N1 9FX (GB)
(72) Inventor: Pardhi, Yogiraj, Derby, Derbyshire DE24 8BJ (GB)
(74) Representative: Rolls-Royce plc

(56) References cited:
- EP-A1- 3 293 276
- GB-A- 2 071 695
- US-A1- 2014 034 626

## Description

### FIELD OF THE INVENTION

The present invention relates to a nickel-base superalloy and the use thereof in the fabrication of metallic articles, components and structures, for example aerospace components. In one example, the nickel-base superalloy can be used to fabricate metallic articles in an additive manufacturing process or a powder-based manufacturing process.

### BACKGROUND OF THE INVENTION

Additive manufacturing using high gamma prime (γ') precipitation-strengthened nickel-base superalloys is notoriously difficult due to their tendency to crack during the deposition process or during subsequent post-processing. The cracking during the deposition process can be categorised in two types, viz. solidification cracking and strain age cracking in reheated zones. US2014/034626AA discloses an example of an existing alloy composition.

Existing alloy compositions such as CM247LC are optimised for conventional processes such as casting, and therefore the use of these materials in additive manufacturing processes results in sub-optimal microstructure and properties. In the case of CM247LC, two particular problems make it unsuitable for additive manufacturing - cracking, and low tensile and creep ductility at high temperatures.

The present invention is based on the surprising finding that by controlled adjustment of a specific combination of components in the nickel-base superalloy CM247LC, a novel alloy is obtained which provides improvements in cracking behaviour and high-temperature ductility without compromising the temperature capability of the alloy. This novel alloy is suitable for additive manufacturing methods and powder-based manufacturing methods.

CM247LC is described in Harris et al., "MAR-M 247 Derivations - CM247LC DS Alloy, CMSX Single Crystal Alloys, Properties and Performance", 5th Intl. Symposium, Oct 1984, pages 221-230. Its nominal composition is as follows:

| | |
|---|---|
| Cr | 8.1 |
| Co | 9.2 |
| Mo | 0.5 |
| W | 9.5 |
| Ta | 3.2 |
| Al | 5.6 |
| Ti | 0.7 |
| Hf | 1.4 |
| C | 0.07 |
| B | 0.015 |
| Zr | 0.015 |

the balance nickel and unavoidable impurities. Upper limits of manganese (Mn), sulphur (S) and niobium (Nb) in CM247LC are Mn 0.05 wt% max, S 0.003 wt% max, and Nb 0.10 wt% max.

### BRIEF DESCRIPTION OF THE INVENTION

The invention is defined in the appended claims.

In one aspect, the present invention provides a nickel-base superalloy comprising the following composition in wt%:

| | |
|---|---|
| Cr | about 8.0 - about 12.0 |
| Co | about 9.0 - about 11.0 |
| Mo | about 0.4 - about 0.6 |
| W | about 9.0 - about 10.0 |
| Ta | about 0.1 - about 3.5 |
| Al | about 4.4 - about 5.6 |
| Ti | about 0.1 - about 1.0 |
| Hf | about 0.3 - about 0.9 |
| C | about 0.01 - about 0.06 |
| B | about 0.005 - about 0.010 |
| Zr | about 0 - about 0.005 |
| Nb | about 0.1 - about 0.6 |
| Mn | about 0 - about 0.05 |
| S | about 0 - about 0.003 |

the balance nickel and incidental elements and unavoidable impurities.

Preferably, the superalloy comprises the following composition in wt%:

| | |
|---|---|
| Cr | about 8.0 - about 8.5 |
| Co | about 9.0 - about 9.5 |
| Mo | about 0.4 - about 0.6 |
| W | about 9.3 - about 9.7 |
| Ta | about 2.7 - about 3.3 |
| Al | about 4.9 - about 5.6 |
| Ti | about 0.3 - about 0.9 |
| Hf | about 0.3 - about 0.9 |
| C | about 0.03 - about 0.05 |
| B | about 0.005 - about 0.010 |
| Zr | about 0.005 max |
| Nb | about 0.1 - about 0.5 |
| Mn | about 0 - about 0.05 |
| S | about 0 - about 0.003 |

the balance nickel and incidental elements and unavoidable impurities.

In either of the above compositions, the total of Al, Ta and Ti must not exceed 9.0 wt%.

Ta and Nb have similar effects on the alloy properties, and therefore Ta may be replaced by Nb in part or in full at similar atomic %. The total amount of Nb and Ta must not exceed 2.4 at%.

Optional incidental elements which may be present in the new superalloy of the present disclosure can, for example, be selected from the following (wt% unless indicated to be ppm):

| | |
|---|---|
| V | 0.1 max |
| Fe | 0.05 max |
| Si | 0.05 max |
| P | 0.005 max |
| Mg | 0.005 max |
| Cu | 0.01 max |
| N | 75 ppm max |
| O | 150 ppm max |
| Ag | 1 ppm max |
| As | 5 ppm max |
| Bi | 0.1 ppm max |
| Cd | 2 ppm max |
| Ga | 25 ppm |
| In | 0.2 ppm max |
| Pb | 2 ppm max |
| Sb | 2 ppm max |
| Se | 1 ppm max |
| Sn | 10 ppm max |
| Te | 0.1 ppm max |
| Tl | 0.2 ppm max |
| Zn | 5 ppm max. |

Impurities of V, Fe, Si, P, Mg, Cu, N, O, Ag, As, Bi, Cd, Ga, In, Pb, Sb, Se, Sn, Te, Tl and/or Zn should preferably be within the above stated maximum amounts for each respective element.

The nickel-base superalloy according to the first aspect of the present invention may be in a physical form suitable for use in an additive manufacturing process. Preferably, the nickel-base superalloy according to the first aspect of the present invention will be in the physical form of a powder suitable for use in a Laser Powder Bed Fusion (LPBF) process. Alternatively, the nickel-base superalloy according to the first aspect of the present invention may be in the physical form of a wire, rod, other suitably shaped metal body, or a powder, suitable for use in a directed energy deposition (DED) additive manufacturing process such as, for example, laser-based additive manufacturing (LBAM) including direct laser deposition (DLD), Selective Laser Sintering (SLS), electron beam additive manufacturing (EBAM), laser engineered net shaping (LENS), selective laser melting (SLM), SLM three-dimensional printing (SLM 3D printing), direct metal laser sintering (DMLS), direct metal laser sintering three-dimensional printing (DML 3D printing), electron beam melting (EBM), direct metal deposition (DMD), direct metal tooling (DMT), direct metal tooling three-dimensional printing (DMT 3D printing), construction laser additive direct (CLAD) or ion fusion formation (IFF).

Generally speaking, in a known additive manufacturing process for creating a metal article, component or structure, metal powder or a metal body such as, for example, a rod or wire is fed into a melt pool that is heated, typically by a laser, electron beam or plasma arc. The machine head moves the heat source and metal feed to deposit layers of metal in the desired shape, supported on a substrate or bed, which is suitably metallic. The process typically occurs in a vacuum or inert atmosphere to restrict oxidation of the metals. For further information please refer to "Additive Manufacturing Technologies" by Gibson, Rosen and Stucker (2015), published by Springer. For example, a review of directed energy deposition (DED) processes is contained in Gibson et al., "Directed Energy Deposition Processes", on pages 245-268 of the said "Additive Manufacturing Technologies". Also, C K Chua et al., "3D Printing and Additive Manufacturing" 4th Edition (2014), published by World Scientific Publishing Co.

The nickel-base superalloy according to the first aspect of the present invention may be in the physical form of a powder suitable for use in a powder-based manufacturing process, such as, for example, hot isostatic pressing (HIP) or Metal Injection Moulding (MIM).

Generally speaking, in a known powder-based manufacturing process a metal powder, which may be a shaped powder pre-form, is subjected to heat and pressure to melt or sinter the metal powder particles together to form the desired article, component or structure. For further information please refer to "Powder Metallurgy Technology" by G S Upadhyaya, Cambridge Int Science Publishing (1997); also "Powder Metallurgy", Chapter 4 in "A Textbook of Manufacturing Technology: Manufacturing Processes" by R K Rajput (2007); also "Powder Metallurgy; Science, Technology and Applications", P C Angelo and R Subramanian (2008), pub. PHI Learning Pvt. Ltd.; also W B James, "Powder Metallurgy Methods and Applications", in ASM Handbook (Ed. P Samal and J Newkirk), volume 7 (2015) pages 9 to 19.

In a second aspect, the present invention provides a metal article, component or structure comprising or formed from the nickel-base superalloy according to the first aspect of the invention.

The metal article or structure according to the second aspect of the present invention may, for example, be selected from aerospace components, including statics, turbine components such as turbine blades and combustor components for use in the aerospace industry.

In a third aspect, the present invention provides a method of manufacturing a metal article, component or structure according to the second aspect of the present invention, which comprises using the applying energy to melt the nickel-base superalloy according to the first aspect of the present invention, wherein the nickel-base superalloy is in the physical form of a powder and the energy is applied in a powder-based manufacturing process, or the nickel-base superalloy is in the physical form of a metal body or a powder used as a metal feed in an additive manufacturing process, for example a directed energy deposition (DED) additive manufacturing process.

The powder-based manufacturing process may be a process where a shaped metal powder pre-form of the intended metallic article, component or structure is pressed under heat to melt the metal powder, optionally with further treatment or finishing if desired, to form the desired metallic article or structure. An example of a suitable powder-based manufacturing process according to the third aspect of the present invention is hot isostatic pressing (HIP).

The additive manufacturing process, such as the DED additive manufacturing process may, for example, be selected from laser-based additive manufacturing (LBAM) including direct laser deposition (DLD), electron beam additive manufacturing (EBAM), laser engineered net shaping (LENS), selective laser melting (SLM), SLM three-dimensional printing (SLM 3D printing), direct metal laser sintering (DMLS), direct metal laser sintering three-dimensional printing (DML 3D printing), electron beam melting (EBM), direct metal deposition (DMD), direct metal tooling (DMT), direct metal tooling three-dimensional printing (DMT 3D printing), construction laser additive direct (CLAD) and ion fusion formation (IFF).

In a fourth aspect, the present invention provides a method of manufacturing a nickel-base superalloy according to the first aspect of the invention, the method comprising mixing the components of the superalloy in the required proportions at an elevated temperature in a melt, and allowing the molten mixture to cool to provide the superalloy.

To provide the superalloy in a suitable physical form for use in manufacture, for example as a wire, rod, other metal body or powder, conventional forming methods for such alloys may be employed. Please see the metallurgical reference texts cited above or equivalents for further details.

### DETAILED DESCRIPTION OF THE INVENTION

The present disclosure provides a novel nickel-base superalloy. The alloy composition is selected to improve the high-temperature ductility of articles and structures that are produced from the alloy, namely to reduce the tendency of the articles and structures to crack, in comparison to known alloys. Particular manufacturing methods for metal articles and structures that may suitably use the nickel-base superalloy of the present disclosure include powder-based additive manufacturing or directed energy deposition (DED) additive manufacturing processes.

In particular, the inventors have found that alloys according to the following compositional rules give useful results in terms of substantially restricting cracking without compromising strength:
- reducing the content of Hf from about 1.4 wt% in CM247LC to the range of 0.3 to about 0.9 wt% of the alloy to reduce the chances of incipient melting. With the reduction in C content (see below), keeping Hf at the same level as in CM247LC would increase the tendency for incipient melting. Also Hf increases the chances of formation of more stable MC carbides containing Hf, Ta and W, Ti. An alloy free from Hf may form relatively unstable carbides containing Cr, Mo, W. The reduced Hf will also reduce the tendency for formation of HfO during atomisation, additive manufacturing and subsequent HIP &heat treatment;

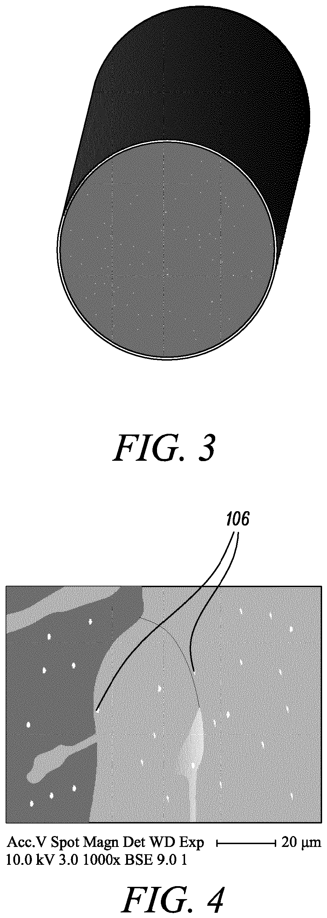

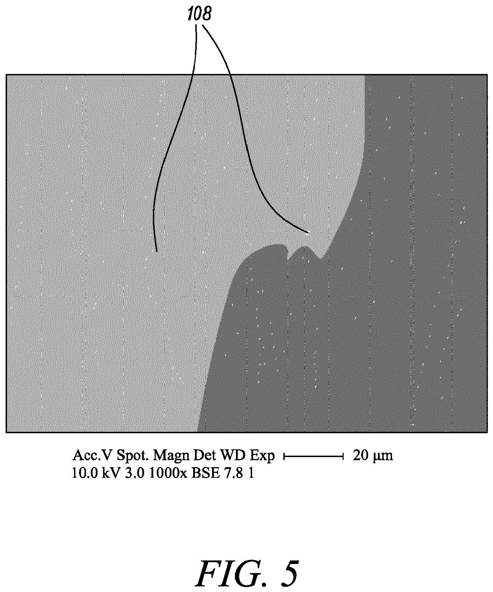

- reducing the content of C from about 0.07 wt% in CM247LC to the range of about 0.01 to about 0.06 wt% of the alloy. This is to reduce the amount and enable formation of discrete carbides (white/bright particles, reference number 106) formed, as shown in **Figure 4****.** The higher amount of C in CM247LC results in strings (white/bright particles, reference number 108) of carbides (**Figure 5**) in the microstructure; this has been shown to result in low tensile and creep ductility at temperatures above 700°C;
- introducing about 0.1 - about 0.6 wt% Nb content to provide gamma prime strengthening of the alloy. Nb is a gamma and gamma prime former. Together with Ta it raises the solidification temperature and increases the solutioning window. A uniform distribution of gamma prime is reported in cast Ni alloys if Nb is added. Nb results in more nucleation points for gamma prime, resulting in finer gamma prime;
- alternatively Ta may be replaced in part or full with Nb at similar atomic % level. This slows down the diffusion kinetic of gamma prime formation leading to a lower tendency for strain age cracking during processing.
- reducing the content of Zr from about 0.015 wt% in CM247LC to no more than 0.005 wt% of the alloy. This improves the weldability of the alloy and hence reduces its tendency to microcrack during additive manufacturing;
- reducing the content of B from about 0.015 wt% in CM247LC to about 0.010 wt% (and within the range of about 0.005 to about 0.010 wt%) of the alloy. This encourages sufficient grain boundary cohesion while reducing the tendency to crack during additive manufacturing;
- limiting the combined content of Al, Ta and Ti to no more than 9.0 wt%, in contrast to CM247LC which imposes no limit. This reduces γ' content and thereby reduces the tendency to crack during the additive manufacturing process.

The combination of a reduction in both the C and Hf and the introduction of Nb to provide additional gamma prime strengthening provides a novel and unpredicted solution to the problem of improving cracking behaviour and high-temperature ductility while retaining the high temperature characteristics of CM247LC, in a different way compared with previous attempts to achieve a similar effect in nickel-base superalloys, such as, for example, European Patent Application No. 2949768.

It is anticipated that the alloy of the present disclosure will demonstrate a γ' solvus temperature about 30 to 50 °C lower than that of CM247LC, and a γ' volume fraction at 600 °C about 5 to 10 % lower than that of CM247LC.

A powder composition of, or comprising, the alloy of the present disclosure, suitable for use in an additive manufacturing process or a powder-based manufacturing process for the production of metal articles and structures, typically has a powder particle size (diameter) distribution between about 10 and about 150 µm, and the particles are typically of substantially spherical shape.

A rod or wire, or other physical form of the alloy according to the present disclosure, usable as a solid feed of metal in an additive manufacturing process, will suitably have a conventional shape and size for the particular intended use. Its manufacture will suitably be by a conventional process for making such shaped forms of nickel-base superalloys.

For additive manufacturing processes such as direct laser deposition, the powder can be placed on a metal bed and can be sintered using an energy source (for example, a laser or an electron beam). Using the nickel-base superalloy of the present disclosure it is possible to fabricate extremely complex components, for example aerospace components, and other articles or structures using well established manufacturing methods.

### BRIEF DESCRIPTION OF THE DRAWINGS

The invention will now be described in more detail, for further illustration and without any limiting effect on the scope of the invention, with reference to the accompanying drawings, in which:
**Figure 1** shows a weldability comparison of commonly-used nickel alloys;
**Figure 2** shows cracks after heat treatment in a cylindrical artefact made from CM247LC by a LPBF technique;
**Figure 3** shows no cracking after heat treatment in a cylindrical artefact made from an alloy according to the first aspect by a LPBF technique;
**Figure 4** shows an example microstructure of an additively made alloy according to the first aspect; and
**Figure 5** shows an example microstructure of additively made CM247LC.

### DETAILED DESCRIPTION OF THE DRAWINGS

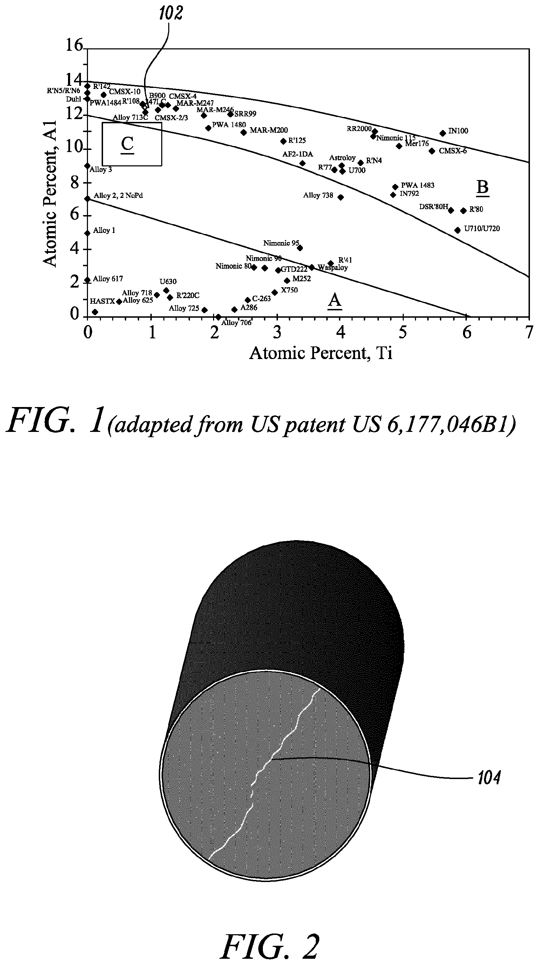

**Figure 1** is a chart showing a selection of commonly-used nickel alloys, with atomic percentage of Al plotted against atomic percentage of Ti. With a few exceptions, the alloys tend to fall into two groups, indicated as A and B. Group A contains easier-to-weld alloys in which the total atomic percentage of Al+Ti is below about 6 or 7; group B contains harder-to-weld alloys in which the total atomic percentage of Al+Ti is between about 12 and about 14. The alloy CM247LC is indicated by an open diamond symbol and the reference number 102.

Compared with the alloys in group B, alloys in group A are easier to weld and therefore welding costs are lower. However, these alloys tend to have lower temperature capability.

Alloys in group B generally offer higher temperature capability. However, the alloys in this group are harder to weld than those in group A and consequently are not amenable to processing using additive layer manufacturing. Welding or ALM of these alloys tends to result in cracking, so that parts made from them are either scrapped or have very short service lives, Box C in Figure 1 indicates the ranges of atomic percentages of Al and Ti in which the nickel-base superalloy of the first aspect lies. The particular combination of Al and Ti in this superalloy places it between group A and group B.

The inventor has established that the alloy of the first aspect unexpectedly has better weldability compared with CM247LC, as shown in Figure 1, because of its lower content (measured as atomic percentage) of Al and Ti. Box C indicates the anticipated weldability window for the claimed ranges of composition, compared with known alloys. The inferior weldability of CM247LC results in strain age cracking during heat treatment. **Figure 2** shows the top surface of a cylindrical artefact produced from CM247LC using a LPBF technique. Cracking is clearly visible at 104.

In contrast, **Figure 3** shows the top surface of a cylindrical artefact made by a LPBF technique (with identical process parameters to the artefact of Figure 2) from an alloy according to the first aspect. There is no cracking. This is a direct consequence of the improved weldability of the alloy composition of the first aspect.

## Claims

1. A nickel-base superalloy comprising the following composition in wt%:
| | |
|---|---|
| Cr | 8.0 - 12.0; |
| Co | 9.0 - 11.0; |
| Mo | 0.4 - 0.6; |
| W | 9.0 - 10.0; |
| Ta | 0.1 - 3.5; |
| Al | 4.4 - 5.6; |
| Ti | 0.1 - 1,0; |
| Hf | 0.3 - 0.9; |
| C | 0.01 - 0.06; |
| B | 0.005 - 0.010; |
| Zr | 0 - 0.005; |
| Nb | 0.1 - 0.6; |
| Mn | 0 - 0.05; |
| S | 0 - 0.003; |
the balance Ni and unavoidable impurities;
in which the total content of Al, Ta and Ti does not exceed 9.0 wt% and in which the total content of Nb and Ta does not exceed 2.4 at%.

2. The nickel-base superalloy of claim 1, comprising the following composition in wt%:
| | |
|---|---|
| Cr | 8.0 - 12.0; |
| Co | 9.0 - 11.0; |
| Mo | 0.4 - 0.6; |
| W | 9.0 - 10.0; |
| Ta | 0.1 - 3.5; |
| Al | 4.4 - 5.6; |
| Ti | 0.1-1.0; |
| Hf | 0.3 - 0.9; |
| C | 0.01 - 0.06; |
| B | 0.005 - 0.010; |
| Zr | 0 - 0.005; |
| Nb | 0.1 - 0.6; |
| Mn | 0 - 0.05; |
| S | 0 - 0.003; |
the balance Ni and incidental elements and unavoidable impurities;
in which the total content of Al, Ta and Ti does not exceed 9.0 wt% and in which the total content of Nb and Ta does not exceed 2.4 at%.

3. The nickel-base superalloy of claim 1, comprising the following composition in wt%:
| | |
|---|---|
| Cr | 8.0 - 8.5; |
| Co | 9.0 - 9.5; |
| Mo | 0.4 - 0.6; |
| W | 9.3 - 9.7; |
| Ta | 2.7 - 3.3; |
| Al | 4.9 - 5.6; |
| Ti | 0.3 - 0.9; |
| Hf | 0.3 - 0.9; |
| C | 0.03 - 0.05; |
| B | 0.005 - 0.010; |
| Zr | 0 - 0.005; |
| Nb | 0.1 - 0.5; |
| Mn | 0 - 0.05; |
| S | 0 - 0.003; |
the balance Ni and unavoidable impurities;
in which the total content of Al, Ta and Ti does not exceed 9.0 wt% and in which the total content of Nb and Ta does not exceed 2.4 at%.

4. The nickel-base superalloy of claim 3, comprising the following composition in wt%:
| | |
|---|---|
| Cr | 8.0 - 8.5; |
| Co | 9.0 - 9.5; |
| Mo | 0.4 - 0.6; |
| W | 9.3 - 9.7; |
| Ta | 2.7 - 3.3; |
| Al | 4.9 - 5.6; |
| Ti | 0.3 - 0.9; |
| Hf | 0.3 - 0.9; |
| C | 0.03 - 0.05; |
| B | 0.005 - 0.010; |
| Zr | 0 - 0.005; |
| Nb | 0.1 - 0.5; |
| Mn | 0 - 0.05; |
| S | 0 - 0.003; |
the balance Ni and unavoidable impurities;
in which the total content of Al, Ta and Ti does not exceed 9.0 wt% and in which the total content of Nb and Ta does not exceed 2.4 at%.

5. The nickel-base superalloy of any one of claims 1 to 4, in a physical form which is suitable for use in an additive manufacturing process.

6. The nickel-base superalloy of any one of the preceding claims, in the form of a wire, rod or powder suitable for use in a directed energy deposition (DED) additive manufacturing process.

7. The nickel-base superalloy of claim 5 or claim 6, which is suitable for use in a manufacturing process selected from laser-based additive manufacturing (LBAM), direct laser deposition (DLD), Laser powder bed fusion (LPBF), Selective Laser Sintering (SLS) electron beam additive manufacturing (EBAM), laser engineered net shaping (LENS), selective laser melting (SLM), SLM three-dimensional printing (SLM 3D printing), direct metal laser sintering (DMLS), direct metal laser sintering three-dimensional printing (DML 3D printing), electron beam melting (EBM), direct metal deposition (DMD), direct metal tooling (DMT), direct metal tooling three-dimensional printing (DMT 3D printing), construction laser additive direct (CLAD) and ion fusion formation (IFF).

8. The nickel-base superalloy of any one of claims 1 to 4, in a physical form which is suitable for use in a powder-based manufacturing process.

9. The nickel-base superalloy of any one of claims 1, 2, 3, 4, or 8, in the form of a powder suitable for use in hot isostatic pressing (HIP).

10. The nickel-base superalloy of any one of claims 1, 2, 3, 4, or 8, in the form of a powder suitable for use in metal injection moulding (MIM).

11. A metal article, component or structure comprising the nickel-base superalloy of any one of the preceding claims.

12. The metal article, component or structure of claim 11, which is selected from statics, turbine blades, other turbine components, and combustor components for use in the aerospace industry.

13. A method of manufacturing a metal article, component or structure, which comprises applying energy to melt a nickel-base superalloy as defined in any one of claims 1 to 10 to form a metal article, component or structure as defined in claim 11 or claim 12.

14. The method of claim 13, wherein the nickel-base superalloy is in the physical form of a powder and the energy is applied in a powder-based manufacturing process, or the nickel-base superalloy is in the form of a metal body or a powder as a metal feed and the energy is applied in an additive manufacturing process.

15. A method of manufacturing the nickel-base superalloy of any one of claims 1 to 10, the method comprising mixing the components of the superalloy in the required proportions at an elevated temperature in a melt, and allowing the molten mixture to cool to provide the superalloy.

## Patentansprüche

1. Nickelbasierte Superlegierung, umfassend die folgende Zusammensetzung in Gew.-%:
| | |
|---|---|
| Cr | 8,0 - 12,0; |
| Co | 9,0 - 11,0; |
| Mo | 0,4 - 0,6; |
| W | 9,0 - 10,0; |
| Ta | 0,1 - 3,5; |
| Al | 4,4 - 5,6; |
| Ti | 0,1 - 1,0; |
| Hf | 0,3 - 0,9; |
| C | 0,01 - 0,06; |
| B | 0,005 - 0,010; |
| Zr | 0 - 0,005; |
| Nb | 0,1 - 0,6; |
| Mn | 0 - 0,05; |
| S | 0 - 0,003; |
wobei der Rest Ni und unvermeidbare Verunreinigungen sind;
bei welcher der Gesamtgehalt an Al, Ta und Ti 9,0 Gew.-% nicht überschreitet und bei welcher der Gesamtgehalt an Nb und Ta 2,4 Atom-% nicht überschreitet.

2. Nickelbasierte Superlegierung nach Anspruch 1, umfassend die folgende Zusammensetzung in Gew.-%:
| | |
|---|---|
| Cr | 8,0 - 12,0; |
| Co | 9,0 - 11,0; |
| Mo | 0,4 - 0,6; |
| W | 9,0 - 10,0; |
| Ta | 0,1 - 3,5; |
| Al | 4,4 - 5,6; |
| Ti | 0,1 - 1,0; |
| Hf | 0,3 - 0,9; |
| C | 0,01 - 0,06; |
| B | 0,005 - 0,010; |
| Zr | 0 - 0,005; |
| Nb | 0,1 - 0,6; |
| Mn | 0 - 0,05; |
| S | 0 - 0,003; |
wobei der Rest Ni und zufällige Elemente und unvermeidbare Verunreinigungen sind;
bei welcher der Gesamtgehalt an Al, Ta und Ti 9,0 Gew.-% nicht überschreitet und bei welcher der Gesamtgehalt an Nb und Ta 2,4 Atom-% nicht überschreitet.

3. Nickelbasierte Superlegierung nach Anspruch 1, umfassend die folgende Zusammensetzung in Gew.-%:
| | |
|---|---|
| Cr | 8,0 - 8,5; |
| Co | 9,0 - 9,5; |
| Mo | 0,4 - 0,6; |
| W | 9,3 - 9,7; |
| Ta | 2,7 - 3,3; |
| Al | 4,9 - 5,6; |
| Ti | 0,3 - 0,9; |
| Hf | 0,3 - 0,9; |
| C | 0,03 - 0,05; |
| B | 0,005 - 0,010; |
| Zr | 0 - 0,005; |
| Nb | 0,1 - 0,5; |
| Mn | 0 - 0,05; |
| S | 0 - 0,003; |
wobei der Rest Ni und unvermeidbare Verunreinigungen sind;
bei welcher der Gesamtgehalt an Al, Ta und Ti 9,0 Gew.-% nicht überschreitet und bei welcher der Gesamtgehalt an Nb und Ta 2,4 Atom-% nicht überschreitet.

4. Nickelbasierte Superlegierung nach Anspruch 3, umfassend die folgende Zusammensetzung in Gew.-%:
| | |
|---|---|
| Cr | 8,0 - 8,5; |
| Co | 9,0 - 9,5; |
| Mo | 0,4 - 0,6; |
| W | 9,3 - 9,7; |
| Ta | 2,7-3,3; |
| Al | 4,9 - 5,6; |
| Ti | 0,3 - 0,9; |
| Hf | 0,3 - 0,9; |
| C | 0,03 - 0,05; |
| B | 0,005 - 0,010; |
| Zr | 0 - 0,005; |
| Nb | 0,1 - 0,5; |
| Mn | 0 - 0,05; |
| S | 0 - 0,003; |
wobei der Rest Ni und unvermeidbare Verunreinigungen sind;
bei welcher der Gesamtgehalt an Al, Ta und Ti 9,0 Gew.-% nicht überschreitet und bei welcher der Gesamtgehalt an Nb und Ta 2,4 Atom-% nicht überschreitet.

5. Nickelbasierte Superlegierung nach einem der Ansprüche 1 bis 4, in einer physischen Form, die für die Verwendung in einem additiven Fertigungsprozess geeignet ist.

6. Nickelbasierte Superlegierung nach einem der vorhergehenden Ansprüche, in Form eines Drahts, Stabs oder Pulvers, die für die Verwendung in einem additiven Fertigungsprozess mit gerichteter Energieabscheidung (DED) geeignet sind.

7. Nickelbasierte Superlegierung nach Anspruch 5 oder Anspruch 6, die für die Verwendung in einem Fertigungsprozess geeignet ist, der ausgewählt ist aus laserbasierter additiver Fertigung (LBAM), direkter Laserabscheidung (DLD), Laserpulverbettfusion (LPBF), selektivem Lasersintern (SLS), Elektronenstrahl-additiver Fertigung (EBAM), Laser Engineered Net Shaping (LENS), selektivem Laserschmelzen (SLM), SLM-dreidimensionalem Druck (SLM-3D-Druck), Direktem Metall-Lasersintern (DMLS), Direktem Metall-Lasersintern-dreidimensionalem Druck (DML-3D-Druck), Elektronenstrahlschmelzen (EBM), Direkter Metallabscheidung (DMD), Direct Metal Tooling (DMT), Direct Metal Tooling-dreidimensionalem Druck (DMT-3D-Druck), Konstruktion mit additiver Direktlasertechnik (CLAD) und Ionenfusionsformung (IFF).

8. Nickelbasierte Superlegierung nach einem der Ansprüche 1 bis 4, in einer physischen Form, die für die Verwendung in einem pulverbasierten Fertigungsprozess geeignet ist.

9. Nickelbasierte Superlegierung nach einem der Ansprüche 1, 2, 3, 4 oder 8, in der Form eines Pulvers, das für die Verwendung beim heißisostatischen Pressen (HIP) geeignet ist.

10. Nickelbasierte Superlegierung nach einem der Ansprüche 1, 2, 3, 4 oder 8, in der Form eines Pulvers, das für die Verwendung im Metallspritzguss (MIM) geeignet ist.

11. Metallgegenstand, -komponente oder -struktur, umfassend die nickelbasierte Superlegierung nach einem der vorhergehenden Ansprüche.

12. Metallgegenstand, -komponente oder -struktur nach Anspruch 11, der oder die aus Statik, Turbinenschaufeln, anderen Turbinenkomponenten und Brennkammerkomponenten für die Verwendung in der Luft- und Raumfahrtindustrie ausgewählt ist.

13. Verfahren zur Fertigung eines Metallgegenstands, einer Metallkomponente oder -struktur, welches das Aufbringen von Energie zum Schmelzen einer nickelbasierten Superlegierung nach einem der Ansprüche 1 bis 10 umfasst, um einen Metallgegenstand, eine Metallkomponente oder -struktur nach Anspruch 11 oder Anspruch 12 zu bilden.

14. Verfahren nach Anspruch 13, wobei die nickelbasierte Superlegierung in der physischen Form eines Pulvers vorliegt und die Energie in einem pulverbasierten Fertigungsprozess aufgebracht wird, oder die nickelbasierte Superlegierung in der Form eines Metallkörpers oder eines Pulvers als Metallzufuhr vorliegt und die Energie in einem additiven Fertigungsprozess aufgebracht wird.

15. Verfahren zur Fertigung der nickelbasierten Superlegierung nach einem der Ansprüche 1 bis 10, wobei das Verfahren Mischen der Komponenten der Superlegierung in den erforderlichen Anteilen bei einer erhöhten Temperatur in einer Schmelze und das Abkühlenlassen der geschmolzenen Mischung umfasst, um die Superlegierung bereitzustellen.

## Revendications

1. Superalliage à base de nickel comprenant la composition suivante en % en poids :
| | |
|---|---|
| Cr | 8,0 - 12,0 ; |
| Co | 9,0 - 11,0 ; |
| Mo | 0,4 - 0,6 ; |
| W | 9,0 - 10,0 ; |
| Ta | 0,1-3,5; |
| Al | 4,4 - 5,6 ; |
| Ti | 0,1 - 1,0 ; |
| Hf | 0,3 - 0,9 ; |
| C | 0,01 - 0,06 ; |
| B | 0,005 - 0,010 ; |
| Zr | 0 - 0,005 ; |
| Nb | 0,1 - 0,6 ; |
| Mn | 0 - 0,05 ; |
| S | 0 - 0,003 ; |
le reste étant Ni et des impuretés inévitables ;
dans lequel la teneur totale en Al, Ta et Ti ne dépasse pas 9,0 % en poids et dans lequel la teneur totale en Nb et Ta ne dépasse pas 2,4 % atomique.

2. Superalliage à base de nickel de la revendication 1, comprenant la composition suivante en % en poids :
| | |
|---|---|
| Cr | 8,0 - 12,0 ; |
| Co | 9,0 - 11,0 ; |
| Mo | 0,4 - 0,6 ; |
| W | 9,0 - 10,0 ; |
| Ta | 0,1-3,5; |
| Al | 4,4 - 5,6 ; |
| Ti | 0,1 - 1,0 ; |
| Hf | 0,3 - 0,9 ; |
| C | 0,01 - 0,06 ; |
| B | 0,005 - 0,010 ; |
| Zr | 0 - 0,005 ; |
| Nb | 0,1 - 0,6 ; |
| Mn | 0 - 0,05 ; |
| S | 0 - 0,003 ; |
le reste étant Ni et des éléments accessoires et des impuretés inévitables ;
dans lequel la teneur totale en Al, Ta et Ti ne dépasse pas 9,0 % en poids et dans lequel la teneur totale en Nb et Ta ne dépasse pas 2,4 % atomique.

3. Superalliage à base de nickel de la revendication 1, comprenant la composition suivante en % en poids :
| | |
|---|---|
| Cr | 8,0 - 8,5 ; |
| Co | 9,0 - 9,5 ; |
| Mo | 0,4 - 0,6 ; |
| W | 9,3 - 9,7 ; |
| Ta | 2,7-3,3; |
| Al | 4,9 - 5,6 ; |
| Ti | 0,3 - 0,9 ; |
| Hf | 0,3 - 0,9 ; |
| C | 0,03 - 0,05 ; |
| B | 0,005 - 0,010 ; |
| Zr | 0 - 0,005 ; |
| Nb | 0,1-0,5; |
| Mn | 0 - 0,05 ; |
| S | 0 - 0,003 ; |
le reste étant Ni et des impuretés inévitables ;
dans lequel la teneur totale en Al, Ta et Ti ne dépasse pas 9,0 % en poids et dans lequel la teneur totale en Nb et Ta ne dépasse pas 2,4 % atomique.

4. Superalliage à base de nickel de la revendication 3, comprenant la composition suivante en % en poids :
| | |
|---|---|
| Cr | 8,0 - 8,5 ; |
| Co | 9,0 - 9,5 ; |
| Mo | 0,4 - 0,6 ; |
| W | 9,3 - 9,7 ; |
| Ta | 2,7 - 3,3 ; |
| Al | 4,9 - 5,6 ; |
| Ti | 0,3 - 0,9 ; |
| Hf | 0,3 - 0,9 ; |
| C | 0,03 - 0,05 ; |
| B | 0,005 - 0,010 ; |
| Zr | 0 - 0,005 ; |
| Nb | 0,1 - 0,5 ; |
| Mn | 0 - 0,05 ; |
| S | 0 - 0,003 ; |
le reste étant Ni et des impuretés inévitables ;
dans lequel la teneur totale en Al, Ta et Ti ne dépasse pas 9,0 % en poids et dans lequel la teneur totale en Nb et Ta ne dépasse pas 2,4 % atomique.

5. Superalliage à base de nickel de l'une quelconque des revendications 1 à 4, sous une forme physique qui convient à une utilisation dans un processus de fabrication additive.

6. Superalliage à base de nickel d'une quelconque des revendications précédentes, sous la forme d'un fil, d'une tige ou d'une poudre convenant à une utilisation dans un processus de fabrication additive par dépôt d'énergie dirigée (DED).

7. Superalliage à base de nickel de la revendication 5 ou de la revendication 6, qui convient pour une utilisation dans un processus de fabrication choisi parmi la fabrication additive par laser (LBAM), le dépôt laser direct (DLD), la fusion laser sur lit de poudre (LPBF), le frittage sélectif par laser (SLS), fabrication additive par faisceau d'électrons (EBAM), formage net conçu par laser (LENS), fusion sélective au laser (SLM), impression tridimensionnelle SLM (impression SLM 3 D), frittage laser direct de métal (DMLS), impression tridimensionnelle par frittage laser direct de métal (impression 3D DML), fusion par faisceau d'électrons (EBM), dépôt direct de métal (DMD), usinage direct en métal (DMT), impression tridimensionnel par usinage direct en métal (impression 3D DMT), construction additive laser directe (CLAD) et formation par fusion d'ions (IFF).

8. Superalliage à base de nickel de l'une quelconque des revendications 1 à 4, sous une forme physique qui convient à une utilisation dans un procédé de fabrication à base de poudre.

9. Superalliage à base de nickel de l'une quelconque des revendications 1, 2, 3, 4 ou 8, sous la forme d'une poudre convenant à une utilisation en pressage isostatique à chaud (HIP).

10. Superalliage à base de nickel de l'une quelconque des revendications 1, 2, 3, 4 ou 8, sous la forme d'une poudre convenant à une utilisation dans le moulage par injection de métal (MIM).

11. Article, composant ou structure métallique comprenant le superalliage à base de nickel de l'une quelconque des revendications précédentes.

12. Article, composant ou structure métallique de la revendication 11, qui est choisi parmi les composants statiques, les aubes de turbine, d'autres composants de turbine et des composants de chambre de combustion destinés à être utilisés dans l'industrie aérospatiale.

13. Procédé de fabrication d'un article, d'un composant ou d'une structure métallique, qui comprend l'application d'énergie pour fondre un superalliage à base de nickel tel que défini dans l'une quelconque des revendications 1 à 10 afin de former un article, un composant ou une structure métallique tel que défini dans la revendication 11 ou la revendication 12.

14. Procédé de la revendication 13, ledit superalliage à base de nickel étant sous la forme physique d'une poudre et ladite énergie étant appliquée dans un processus de fabrication à base de poudre, ou ledit superalliage à base de nickel étant sous la forme d'un corps métallique ou d'une poudre en tant qu'alimentation en métal et ladite énergie étant appliquée dans un processus de fabrication additive.

15. Procédé de fabrication du superalliage à base de nickel de l'une quelconque des revendications 1 à 10, le procédé comprenant le mélange des composants du superalliage dans les proportions requises à une température élevée dans une masse fondue, et la permission au mélange fondu de refroidir pour fournir le superalliage.
